(19) Europäisches Patentamt

European Patent Office

Office européen des brevets

(11) **EP 0 521 254 B2**

(12) **NEUE EUROPÄISCHE PATENTSCHRIFT**

(45) Veröffentlichungstag und Bekanntmachung des Hinweises auf die Entscheidung über den Einspruch:
**03.03.1999  Patentblatt 1999/09**

(51) Int Cl.⁶: **G01B 5/255**

(45) Hinweis auf die Patenterteilung:
**18.01.1995  Patentblatt 1995/03**

(21) Anmeldenummer: **92106975.3**

(22) Anmeldetag: **23.04.1992**

(54) **Radstellungsmessgerät**

Device for measuring wheel position

Dispositif pour mesurer la position d'une roue

(84) Benannte Vertragsstaaten:
**ES FR GB IT**

(30) Priorität: **29.06.1991  DE 4121655**

(43) Veröffentlichungstag der Anmeldung:
**07.01.1993  Patentblatt 1993/01**

(73) Patentinhaber: **HOFMANN WERKSTATT-TECHNIK GMBH D-64319 Pfungstadt (DE)**

(72) Erfinder:
• **Longa, Simone I-21051 Arcisate (Varese) (IT)**

• **Castelnuovo, Marco I-20152 Milano (IT)**

(74) Vertreter: **Nöth, Heinz, Dipl.-Phys. Patentanwalt, Mozartstrasse 17 80336 München (DE)**

(56) Entgegenhaltungen:
EP-A- 0 034 923          FR-A- 2 326 679
FR-A- 2 356 122          GB-A- 2 017 900
GB-A- 2 025 064          US-A- 3 892 042
US-A- 4 261 108          US-A- 4 854 702
US-A- 4 953 296

## Beschreibung

Die Erfindung betrifft ein Verfahren zur Felgenschlagkompensation beim Messen von Radstellungen an einem Kraftfahrzeug nach dem Oberbegriff des Patentanspruches 1 und ein Radstellungsmeßgerät nach dem Oberbegriff des Patentanspruches 2.

Ein derartiges Verfahren und ein derartiges Radstellungsmeßgerät sind bekannt (FR-A-2 356 122, FR-A-2 326 679, US-A-3 892 042, US-A-4 953 296, US-A-4 261 108, EP-A-0 034 923, GB-A-2 017 900).

Bei den bekannten Radstellungsmeßgeräten kann es sich um optische Meßgeräte handeln, bei denen als Detektoreinrichtungen Projektoren, Meßspiegel, lichtempfindliche Bauelemente verwendet werden. Ferner können mechanisch oder elektromagnetisch arbeitende Detektoreinrichtungen zum Einsatz kommen. Die Detektoreinrichtungen werden an den Kraftfahrzeugrädern mit Hilfe von Radadaptern befestigt und mit der Radachse ausgerichtet. Ferner beinhalten die bekannten Radstellungsmeßgeräte Winkelmeßgeräte, mit denen bei der Radstellungsmessung bestimmte Winkel (Sturzspur, Nachlauf und dergl.) gemessen werden können.

Bevor die Radstellungsmessungen durchgeführt werden, ist es erforderlich, eine Felgenschlagkompensation durchzuführen. Hierzu wird mit dem Radadapter ein optischer oder elektronischer Sensor am angehobenen Rad vorgesehen und aufgrund eines eventuellen Felgenschlages beim Drehen des Kraftfahrzeugrades in jeweils zwei Ebenen (Sturz, Spur) die Auslenkbewegung gemessen, die sich als sinusförmige Auslenkbewegung äußert. Wenn nach diesem Meßvorgang das Rad wieder abgestzt wird, ergibt sich, bedingt durch die Radaufhängung und Radabstützung am Kraftfahrzeug, eine Winkelverschiebung gegenüber der bei der Felgenschlagkompensation ermittelten Bezugswinkellage (Nullpunkt) bei angehobenem Rad. Diese Winkelverschiebung geht als Meßfehler in die sich anschließenden Radstellungsmessungen ein.

Die Messungen von Spreizung und Summenwinkel erfolgen durch Lenkeinschlag. Bei Fahrzeugtypen, insbesondere modernen Sportwägen, läßt sich dieser Lenkeinschlag nicht ohne weiteres durchführen, da Spoiler, tiefgezogene Schutzbleche und dergl. einer Schwenkbewegung, insbesondere eines Detektors, der an einem nach vorne ragenden Arm als Frontsensor am Kraftfahrzeugrad angeordnet ist, im Wege stehen. Häufig stehen einer derartigen Schwenkbewegung auch am Boden vorhandene Hindernisse im Wege. Insbesondere bei Kraftfahrzeugen, deren Karosserie eine nur geringe Bodenfreiheit aufweist, ergeben sich diese Schwierigkeiten.

Aufgabe der Erfindung ist es, ein Verfahren der eingangs genannten Art zu schaffen, bei dem ein aus dem Anheben und Absenken des Kraftfahrzeugrades sich ergebender Fehler der Felgenschlagkompensation beseitigt wird.

Diese Aufgabe wird erfindungsgemäß durch die Merkmale des Patentanspruches 1 gelöst.

Ferner ist es Aufgabe der Erfindung, ein Radstellungsmeßgerät der eingangs genannten Art zu schaffen, mit dem der Fehler der Felgenschlagkompensation ermittelt und Schwierigkeiten, die sich aus Hindernissen für einen bei der Radmessung durchzuführenden Lenkeinschlag ergeben, umgangen werden können.

Diese Aufgabe wird durch die Merkmale des Patentanspruches 2 gelöst.

In bevorzugter Weise ist die Detektoreinrichtung in der Radachse am Radadapter in einem Schwenklager derart gelagert, daß eine Verschwenkung der Detektoreinrichtung um die Radachse durch die Winkelmeßeinrichtung, welche diese Schwenkbewegung abtastet, ermittelt werden kann. Es kann sich hierbei um eine Schwenkbewegung handeln, die von der Bedienungsperson ausgeführt wird, um die Detektoreinrichtung in eine bestimmte Lage, beispielsweise nach dem Absenken des angehobenen Kraftfahrzeugrades, in eine mit der Waagerechten ausgelotete Winkellage zu bringen. Es ist jedoch auch möglich, daß die Detektoreinrichtung selbsttätig aufgrund der Schwerkraft eine mit der Horizontalen ausgelotete oder andere gewünschte Schwenklage einnimmt. Auch diese Schwenkbewegung kann dann durch die Winkelmeßeinrichtung abgetastet und der entsprechende Schwenkwinkel bestimmt werden.

Das Schwenklager kann insbesondere in Form von Kugellagern ausgebildet sein und an einem mit dem Radadapter fest verbundenen Lagerzapfen vorgesehen sein. Für die Abtastung der Schwenkbewegung der Detektoreinrichtung ist mit dem Radadapter, insbesondere mit dem Lagerzapfen, ein Zahnrad fest verbunden. Mit diesem Zahnrad kämmt ein weiteres Zahnrad, das auf einer Welle der Abtasteinrichtung, die einen Meßwandler, beispielsweise in Form eines Potentiometers, aufweist, sitzt. Beim Schwenken wird dieses mit dem Meßwandler verbundene Zahnrad gedreht, und der Meßwandler erzeugt in Abhängigkeit von der Drehbewegung des Zahnrades, die über die Welle auf den Meßwandler übertragen wird, ein elektrisches Signal. Beispielsweise wird durch die Drehbewegung dieses Zahnrades der Widerstandswert eines Potentiometers verstellt, das im Meßwandler vorgesehen ist. Es können auch induktiv, kapazitiv, optisch oder sonstwie arbeitende Meßwandler zum Einsatz kommen.

Anhand der Figuren wird an einem Ausführungsbeispiel die Erfindung noch näher erläutert. Es zeigt:

Fig. 1    schematisch eine Frontansicht in teilweise geschnittener Darstellung eines Ausführungsbeispiels, das an einem Kraftfahrzeugrad befestigt ist;

Fig. 2    eine beim Ausführungsbeispiel der Fig. 1 zum Einsatz kommende konstruktive Einzelheit;

Fig. 3 eine schematische Darstellung zur Erläuterung der Felgenschlagkompensation;

Fig. 4 eine schematische Darstellung für die Erläuterung der Anwendung der Erfindung bei der Felgenschlagkompensation; und

Fig. 5 eine schematische Darstellung zur Erläuterung der Anwendung der Erfindung beim Messen der Spreizung.

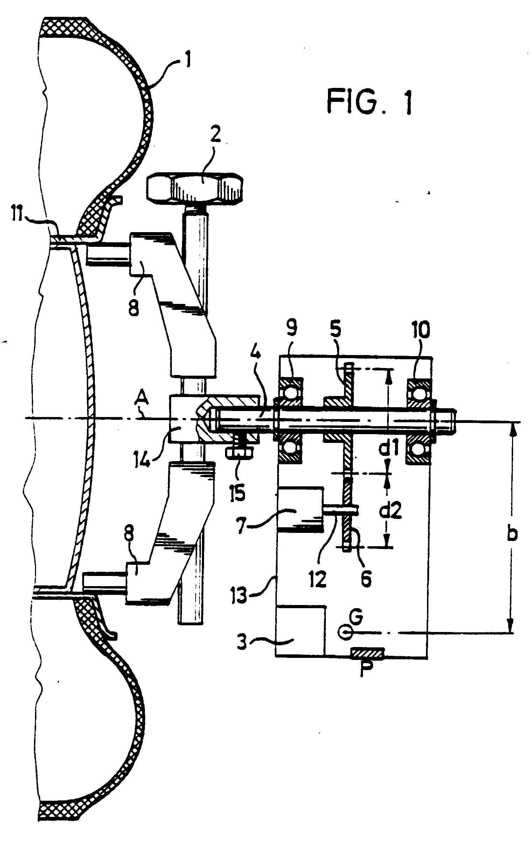

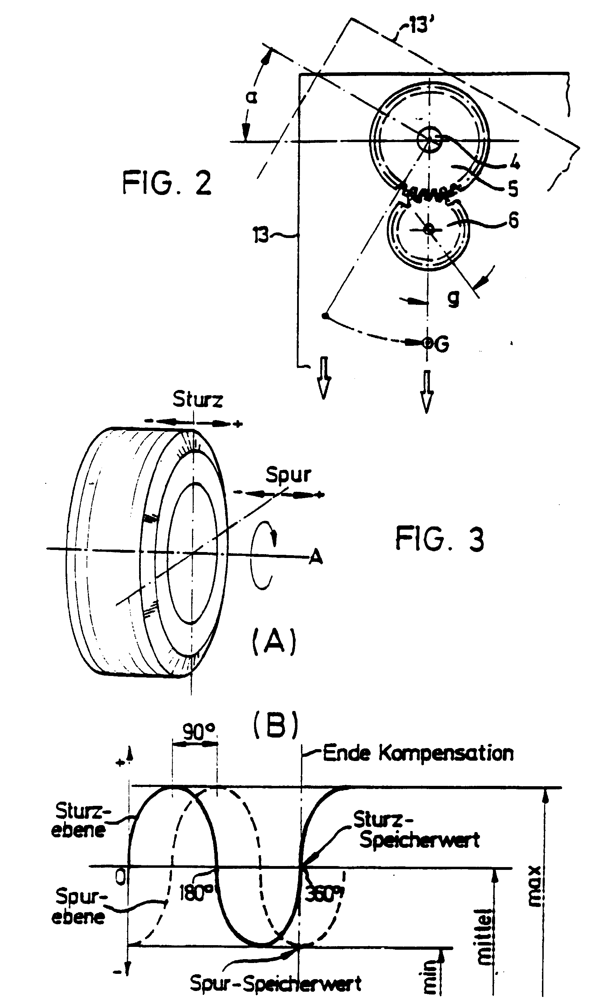

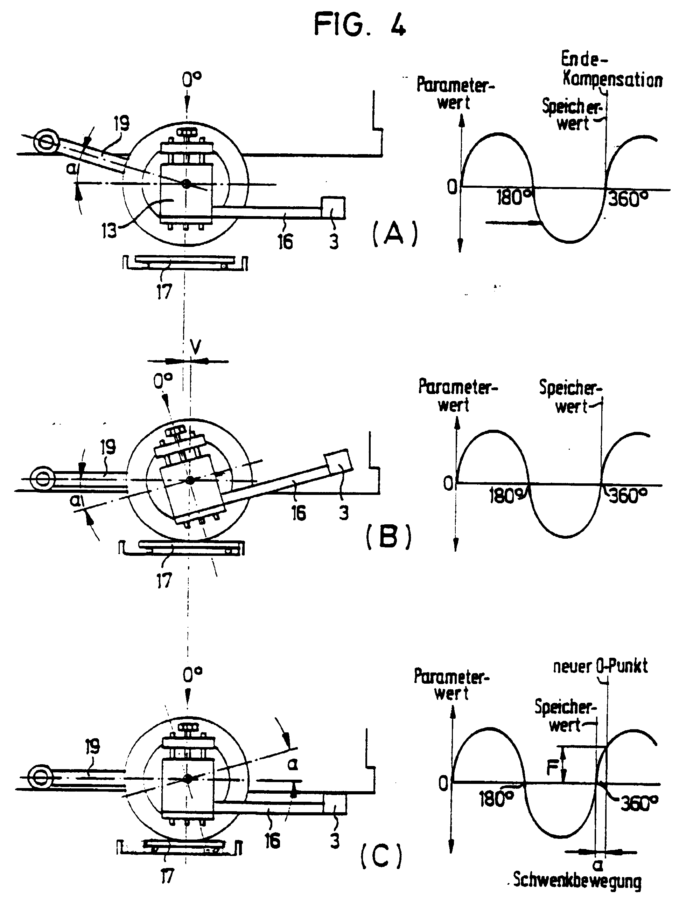

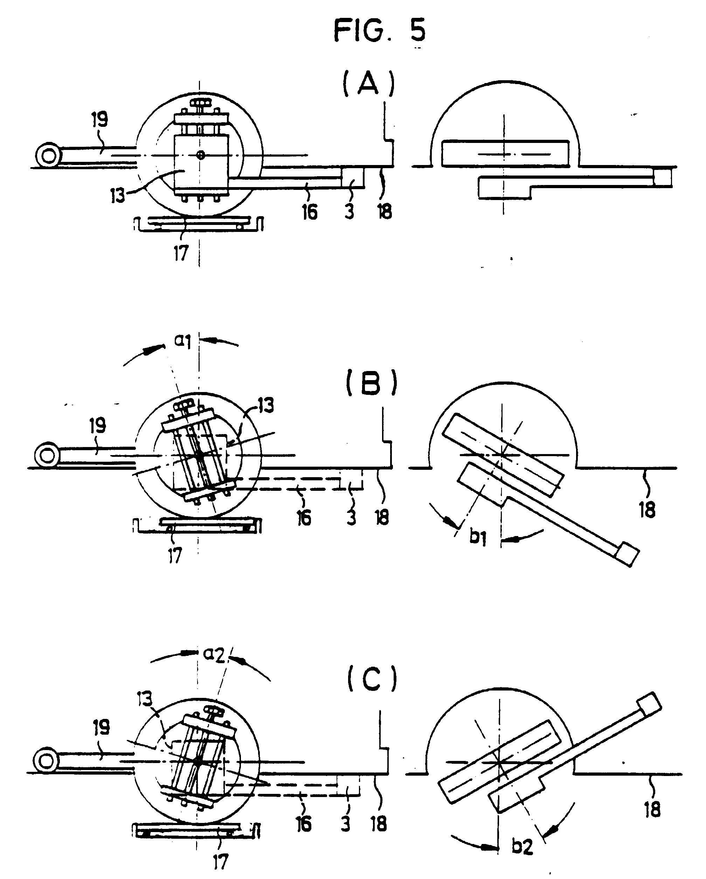

Das in den Fig. 1 und 2 dargestellte Ausführungsbeispiel eines Radstellungsmeßgerätes besitzt eine Detektoreinrichtung 3, die eine optische Sensoreinrichtung, beispielsweise in Form eines Projektors und/oder Spiegels und/oder einer Lichtquelle bzw. eines Infrarot- bzw. Laserstrahlers aufweist. Anstelle der optischen Sensoreinrichtung kann auch eine elektromagnetische Sensoreinrichtung oder auch eine mechanische Sensoreinrichtung bekannter Art vorgesehen sein. Die Detektoreinrichtung 3 kann in einem Gehäuse 13 angeordnet sein. Es ist jedoch auch möglich, daß die Detektoreinrichtung 3 im vorderen Ende eines vom Gehäuse 13 abstehenden Armes 16 untergebracht ist (Figuren 4 und 5).

Die in den Fig. 1 und 2 dargestellte Ausführungsform eines Radstellungsmeßgerätes besitzt ferner einen Radadapter. Dieser besteht in bekannter Weise aus Haltekrallen 8, welche an eine Felge 11 eines Kraftfahrzeugrades mit aufgezogenem Reifen 1 ansetzbar sind. Mit Hilfe einer Zentrierschraube 2 werden die Haltekrallen 8 zentrisch an der Felge 11 des Kraftfahrzeugrades befestigt. Ferner besitzt der Radadapter einen mit den Haltekrallen 8 verbundenen Träger 14. Am Träger 14 ist ein Lagerzapfen 4, beispielsweise mit Hilfe einer Schaube 15, befestigt. Der Radadapter wird an der Felge 11 des Kraftfahrzeugrades so befestigt, daß der Lagerzapfen 4 koaxial zur Radachse A liegt. Der Radadapter ist dann zentriert am Rad befestigt.

Das Gehäuse 13, an welchem die Detektoreinrichtung 3 gelagert ist, wird mit Hilfe eines Schwenklagers - in Form von zwei Kugellagern 9 und 10 beim dargestellten Ausführungsbeispiel - am Lagerzapfen 4 gelagert. Anstelle des Gehäuses 13 kann ein entsprechender Rahmen vorgesehen sein, an welchem die Detektoreinrichtung 3 gelagert ist. Auf diese Weise wird erreicht, daß die Detektoreinrichtung 3 um die Radachse A schwenkbar am Radadapter, welcher, wie oben beschrieben, zentrisch am Kraftfahrzeugrad befestigt ist, geschwenkt werden kann. Das Gehäuse 13 und somit die Detektoreinrichtung 3 kann in einer bestimmten Schwenkwinkellage durch eine nicht näher dargestellte Arretierung fixiert werden. Das Verschwenken des Gehäuses 13 und der Detektoreinrichtung 3 kann von Hand durch die Bedienungsperson erfolgen. Beim dargestellten Ausführungsbeispiel kann jedoch auch aufgrund von Schwerkraft (Gravitation) eine selbsttätige Verschwenkung der Detektoreinrichtung 3 um den Lagerzapfen 4, d.h. um die Radachse A, erfolgen. Beispielsweise durch Anbringen eines Zusatzgewichtes P (Fig. 1) kann das Gehäuse 13 mit der daran gelagerten Detektoreinrichtung 3 in der Weise austariert sein, daß die Detektoreinrichtung 3 aufgrund der Schwerkraft selbsttätig in eine in horizontaler Richtung austarierte Lage, wie sie beispielsweise in der Fig. 4 (A) bzw. 4 (C) dargestellt ist, kommt. Wie in Fig. 2 dargestellt ist, kann auf diese Weise das Gehäuse 13, welches eine strichlierte Position 13' einnimmt und in dieser strichlierten Position um einen Winkel a aus der Horizontalen verschwenkt ist, aufgrund der Schwerkraftwirkung selbsttätig um die Radachse A in Schwenklagern 9 und 10 verschwenken. Mit der Lage von G ist die Schwerpunktlage in den Fig. 1 und 2 dargestellt. Die Schwerkraft wirkt mit einem Hebelarm b auf das Gehäuse 13 und die damit verbundenen Baugruppen. Das Schwenklager 9, 10 besitzt eine nur geringe Reibung, so daß das infolge der Schwerkraft auf das Gehäuse 13 wirkende Drehmoment für die selbsttätige Verschwenkung ausreicht.

Wie aus den Fig. 1 und 2 zu ersehen ist, kann die Schwenkbewegung des Gehäuses 13 bzw. der Detektoreinrichtung 3 durch eine Abtasteinrichtung abgetastet werden. Diese Abtasteinrichtung beinhaltet im wesentlichen ein drehfest mit dem Lagerzapfen 4 verbundenes Zahnrad 5 und ein mit diesem Zahnrad 5 kämmendes zweites Zahnrad 6. Das zweite Zahnrad 6 sitzt drehfest aufeiner Welle 12 eines Meßwandlers 7. Beim Verschwenken des Gehäuses 13 aus der Position 13' um den Winkel a wird das Zahnrad 6 mit verschwenkt und dreht sich um einen Winkel g um die Welle 12.

Diese Drehung um den Drehwinkel g wird von der Welle 12 auf ein entsprechendes Wandlerelement im Meßwandler 7 übertragen. Hierbei kann es sich beispielsweise um ein Potentiometer handeln, dessen Widerstandswert in Abhängigkeit vom Drehwinkel g verstellt wird. Der zu ermittelnde bzw. abzutastende Schwenkwinkel a ergibt sich nach folgender Beziehung:

$$a = g \times d1/d2$$

wobei d1 den Durchmesser des Zahnrades 5 und d2 den Durchmesser des Zahnrades 6 bedeuten.

Der als Winkelsensor wirkende Meßwandler 7 ist ebenfalls am Gehäuse 13 gelagert und wird bei der Verschwenkung des Gehäuses 13 zusammen mit der Detektoreinrichtung 3 um die Radachse A in den Schwenklagern 9 und 10 mitverschwenkt. Auf diese Weise wird die Drehung des Zahnrades 6, das mit dem feststehenden Zahnrad 5 kämmt, bewirkt.

Anhand der Figuren 3 und 4 wird bei der Felgenschlagkompensation die Verwendung des in den Figuren 1 und 2 dargestellten Ausführungsbeispiels noch näher erläutert.

Am angehobenen Rad wird zur Felgenschlagkompensation der Adapter befestigt. Am Adapter wird ein entsprechender Sensor, der optisch, elektronisch oder sonstwie ausgebildet sein kann, befestigt, um die aufgrund eines Felgenschlags sich ergebenden Auslenkungen zu ermitteln. Hierzu wird das angehobene Kraftfahrzeugrad mit dem daran zentriert befestigten Radadapter in Drehung versetzt. Während einer oder mehrerer Raddrehungen wird in zwei zueinander senkrechten Ebenen (Sturz und/oder Spur) vom Sensor die Auslenkungen, welche Sinusform haben, ermittelt. In der Fig. 3 (A) sind die Drehung des Kraftfahrzeugrades um die Radachse A und die beiden Meßebenen schematisch dargestellt. In der Fig. 3 (B) sind die vom nicht näher dargestellten Sensor ermittelten sinusförmigen Schwankungssignale für die Sturzebene (durchgezogene Linie) und um 90° versetzt die Spurebene (strichlierte Linie) dargestellt. Diese sinusförmigen Schwankungen ergeben sich aus einem Felgenschlag und bewegt sich zwischen einem minimalen und maximalen Ausschlag. Die Mittellinie dieser sinusförmigen Schwankungen bildet die Bezugsachse. Auf der Bezugsachse kann beispielsweise die Drehwinkellage 360°, welche sich jeweils nach einer Umdrehung ergibt, als Ausgangswinkellage für die weiteren Messungen, beispielsweise für die Sturzmessung oder die Spurmessung, angenommen werden. Die Speicherwerte für Sturz und Spur sind in der Kurvendarstellung der Fig. 3 bei 360° angenommen. Hier ist der Wert für die Spurebene der Maximalwert des Felgenausschlags und der Wert für die Sturzebene der Mittelwert. Diese Werte können elektronisch abgespeichert und bei der späteren Radvermessung eingesetzt werden. Damit die Felgenschlagkompensation beibehalten bleibt, darf der Radadapter von der Felge nicht mehr entfernt werden, und die Detektoreinrichtung 3 wird am Radadapter mit dieser Ausgangsdrehwinkellage des Kraftfahrzeugrades ausgerichtet. Das Gehäuse 13 und die Detektoreinrichtung 3, welche bei den in Fig. 4 und 5 dargestellten Ausführungsbeispielen am vorderen Ende eines Trägerarme 16 angeordnet ist, nimmt dann beispielsweise die in Fig. 4 (A) dargestellte Stellung ein. In der Fig. 4 (A) ist ferner der sinusförmige Parameterwert für den Felgenschlag (in der Sturzebene) dargestellt. Der Speicherwert bei 360° entspricht dem neuen Nullpunkt, der mit der Anordnung von Radadapter, Gehäuse 13, Trägerarm 16 und Detektoreinrichtung 3 für die Messung ausgerichtet ist.

Beim Absenken des Kraftfahrzeugrades wird, bedingt durch die Aufhängung des Kraftfahrzeugrades, welche mit 19 schematisch dargestellt ist, und gegebenenfalls auch durch die Abfederung und die Stoßdämpfereinrichtung, das Kraftfahrzeugrad gedreht, wenn es auf eine bei der Messung verwendete verschiebbare Plattform 17 aufgesetzt wird. Wie die Fig. 4 (B) zeigt, verschiebt sich dabei die Plattform 17 um eine Strecke V. Wie in der Fig. 4 (C) dargestellt ist, wird aufgrund von Schwerkraftwirkung oder auch von Hand durch die Bedienungsperson das Gehäuse 13, der Schwenkarm 16 und die Detektoreinrichtung 3 mit der horizontalen Lage ausgerichtet, wobei eine Schwenkbewegung um den Lagerzapfen 4 bzw. um die Radachse A um einen Schwenkwinkel a gegenüber dem Radadapter 2, 8 erfolgt. Dieser Schwenkwinkel a entspricht einem Kompensationsfehler, d.h. einer Verschiebung des Null-Punktes aus dem bei der Felgenschlagkompensation gewonnenen Null-Punkt, der In den Kurvendarstellungen der Figuren 4 (A) und 4 (B) mit "Speicherwert" bezeichnet ist. Wie aus der Kurvendarstellung in Fig. 4 (C) zu ersehen ist, wirkt sich der Schwenkwinkel a als Kompensationsfehler F aus und würde, wenn er nicht berücksichtigt wird, so in die anschließenden Messungen eingehen.

Mit Hilfe der in der Fig. 1 und 2 dargestellten Ausführungsform der Erfindung ist es jedoch möglich, den Schwenkwinkel a, wie oben erläutert, zu ermitteln und entsprechend in der Auswerteelektroni k abzuspeichern bzw. bei der späteren Berechnung der Radstellung zu berücksichtigen.

In der Fig. 5 (A) ist die Ausgangsposition des Radstellungsmeßgeräts nach dem Ausführungsbeispiel der Figuren 1 und 2 bei der Messung der Spreizung in der linken Darstellung in der Seitenansicht und in der rechten Darstellung in der Ansicht von oben dargestellt. Die Spreizung stellt den Winkel dar, um den der Achsschenkelbolzen gegenüber der Senkrechten zur Querachse des Fahrzeugs nach innen geneigt ist. Die Spreizung wird in Winkelgrad gemessen, und dieser Winkel wird abgeleitet aus der Messung der Winkel a1 und a2 bei bestimmten Lenkeinschlägen mit den Lenkeinschlagwinkeln b1 und b2. Beim Lenkeinschlag gegenüber dem Kraftfahrzeug, von dem ein Kraftfahrzeugumriß 18 in den Figuren dargestellt ist, nach außen um einen Einschlagwinkel b1 (Fig. 5 (B)), verschwenkt das Rad zusammen mit dem daran fixierten Radadapter um den Winkel a1 gegenüber dem Gehäuse 13, das seine Lage (strichlierte Darstellung) beibehält Dieser Winkel a1 wird auf die oben beschriebene Art und Weise vom Wandler 7 erfaßt und ein entsprechendes Signal an eine nicht näher dargestellte Verarbeitungselektronik weitergegeben.

Beim Lenkeinschlag gegenüber dem Fahrzeug 18 nach innen um einen Einschlagwinkel b2 (Fig. 5 (C)) verschwenkt das Kraftfahrzeugrad zusammen mit dem daran befestigten Adapter um einen Winkel a2 gegenüber dem seine Position beibehaltenden Gehäuse 13 (strichlierte Darstellung). Auch dieser Winkel wird mit Hilfe der in den Figuren 1 und 2 dargestellten Meßwandleranordnung 7, die einen Winkelsensor darstellt, gemessen.

Der Winkelwert für die Spreizung S ergibt sich aus obigen Winkeln nach folgender Formel:

$$S = (a1 - a2)/(\sin b2 - \sin b1).$$

Bei dieser Messung können der Arm 16 und die daran vorgesehene Detektoreinrichtung 3, welche bei der Winkelbestimmung für die Spreizung nicht benötigt werden, so angeordnet sein, daß ihre Schwenkbewegung durch die Fahrzeugumrisse 18 oder andere am Boden vorhandene Hindernisse nicht beeinträchtigt wird. Aus obiger Darstellung ergibt sich ferner, daß für die Messung der Spreizung ein zusätzlicher Sensor nicht erforderlich ist, wenn ein Radstellungsmeßgerät nach der Erfindung mit einem Winkelsensor 7 der oben beschriebenen Art zum Einsatz kommt.

**Patentansprüche**

1. Verfahren zur Felgenschlagkompensation beim Messen von Radstellungen an einem Kraftfahrzeug, bei dem das zu messende Rad in angehobenem Zustand gedreht wird, die während wenigstens einer Umdrehung ermittelten Auslenkungen, die aus einem Felgenschlag des Rades resultieren, in ein sinusförmiges elektrisches Kompensationssignal umgewandelt und gespeichert werden und bei dem nach dem Aufsetzen des Rades auf einer Unterlage unter Berücksichtigung des gespeicherten Kompensationssignales die Messung der Radstellung durchgeführt wird,
dadurch gekennzeichnet,
daß der Winkel, um den sich das Rad beim Aufsetzen auf die Unterlage um seine Radachse dreht, ermittelt wird und daß der Nullpunkt des gespeicherten sinusförmigen Kompensationssignales um den ermittelten Winkelwert verschoben wird.

2. Radstellungsmeßgerät mit einer Detektoreinrichtung und einem Radadapter, mit welchem die Detektoreinrichtung an einem zu vermessenden Kraftfahrzeugrad gegenüber der Radachse (A) ausgerichtet befestigbar ist, einem zwischen die Detektoreinrichtung (3) und den Radadapter (2,8) geschalteten Winkelmeßgerät (5, 6, 12) zur Messung einer Schwenkwinkelposition, welche der Radadapter (2, 8) und die Detektoreinrichtung (3) in einer zur Radachse (A) senkrechten Ebene um die Radachse zueinander haben, und einem Meßwandler (7), der die Schwenkwinkelposition in ein elektrisches Signal umwandelt,
dadurch gekennzeichnet,
daß mit dem Meßwandler (7) ein Zahnrad (6) gekoppelt ist, das mit einem starr mit dem Radadapter (2, 8) verbundenen Zahnrad (5) kämmt, dessen Achse koaxial zur Radachse (A) liegt, und daß eine Drehung des mit dem Meßwandler (7) gekoppelten Zahnrades (6) einem Winkel (a, a1, a2) entspricht, der eine Änderung der Schwenkwinkelposition der Detektoreinrichtung (3) gegenüber dem Radadapter (2, 8) in der zur Radachse (A) senkrechten Ebene ist, und daß eine Unterlage (17), auf die das angehobene Kraftfahrzeugrad (1, 11) mit der über den Radadapter (2, 8) befestigten und zentrierten Detektoreinrichtung (3) aufsetzbar ist, in der Weise beweglich ausgebildet ist, daß das Kraftfahrzeugrad (1, 11) mit der daran befestigten Detektoreinrichtung (3) um die Radachse (A) eine Schwenkbewegung ausführt und daß die Drehung des mit dem Meßwandler (7) gekoppelten Zahnrades (6) dem Winkel (a) dieser Schwenkbewegung entspricht.

3. Radstellungsmeßgerät nach Anspruch 2, dadurch gekennzeichnet, daß die Detektoreinrichtung (3) am Radadapter (2, 8) in einem Schwenklager (9, 10) um die Radachse (A) gelagert ist und die Winkelbestimmung aus einer durch Schwerkraft bedingten Schwenkbewegung der Detektoreinrichtung (3) um das Schwenklager (9, 10) abgeleitet ist.

4. Radstellungsmeßgerät nach Anspruch 2, dadurch gekennzeichnet, daß der Meßwandler (7) ein Potentiometer aufweist.

5. Radstellungsmeßgerät nach Anspruch 3, dadurch gekennzeichnet, daß das Schwenklager (9, 10) der Detektoreinrichtung (3) an einem in der Radachse (A) am Radadapter (2, 8) befestigten Lagerzapfen (4) vorgesehen ist.

6. Radstellungsmeßgerät nach Anspruch 2, dadurch gekennzeichnet, daß der Winkel (a) der Schwenkbewegung der Detektoreinrichtung (3) ein Winkel ist, um den die Detektoreinrichtung (3) gegenüber der Horizontalen um die Radachse (A) verschwenkt ist.

7. Radstellungsmeßgerät nach einem der Ansprüche 2 bis 6, dadurch gekennzeichnet, daß der Winkel (a) der Schwenkbewegung der Detektoreinrichtung (3) einer Differenz der beiden Winkellagen entspricht, welche die Detektoreinrichtung (3) bei der Felgenschlagkompensation zum einen bei angehobenem und zum anderen bei abgesetztem Kraftfahrzeugrad (1, 11) aufweist.

8. Radstellungsmeßgerät nach einem der Ansprüche 2 bis 5, dadurch gekennzeichnet, daß die Drehung des mit dem Meßwandler (7) gekoppelten Zahnrades (6) dem Winkel (a1, a2) entspricht, um den die Detektoreinrichtung (3) gegenüber der Vertikalen um die Radachse (A) verschwenkt ist.

9. Radstellungsmeßgerät nach Anspruch 8, dadurch gekennzeichnet, daß der Winkel (a1, a2) ein Schwenkwinkel ist, den die Detektoreinrichtung (3) gegenüber dem Radadapter (2, 8) bei Lenkeinschlag des Kraftfahrzeugrades nach außen und nach innen bei der Messung der Spreizung ausführt.

## Claims

1. A method of wheel rim run-out compensation when measuring wheel positions on a motor vehicle, wherein the wheel to be measured is rotated in the raised condition, the deflections which are detected during at least one revolution and which result from a rim run-out of the wheel are converted into a sinusoidal. electrical compensation signal and stored, and wherein measurement of the wheel position is effected after the wheel is put on to a support having regard to the stored compensation signal, characterised in that the angle through which the wheel rotates about its wheel axis when it is put on to the support is ascertained and that the zero point of the stored sinusoidal compensation signal is displaced by the ascertained angle value.

2. A wheel position measuring apparatus comprising a detector device and a wheel adaptor with which the detector device can be fixed to a motor vehicle wheel to be measured, in aligned relationship with the wheel axis (A), an angle measuring device (5, 6, 12) connected between the detector device (3) and the wheel adaptor (2, 8), for measuring a pivotal angle position which the wheel adaptor (2, 8) and the detect or device (3) have in a plane perpendicular to the wheel axis (A) about the wheel axis relative to each other, and a measuring transducer (7) which converts the pivotal angle position into an electrical signal, characterised in that coupled to the measuring transducer (7) is a gear (6) meshing with a gear (5) which is rigidly connected to the wheel adaptor (2, 8) and whose axis is coaxial with respect to the wheel axis (A), and that a rotary movement of the gear (6) which is coupled to the measuring transducer (7) corresponds to an angle (a, al, a2) which is a change in the pivotal angle position of the detector device (3) with respect to the wheel adaptor (2, 8) in the plane which is perpendicular to the wheel axis (A), and that a support (17) on to which the lifted motor vehicle wheel (1, 11) with the detector device (13) which is centred and fixed by way of the wheel adaptor (2, 8) can be placed is adapted to be movable in such a way that the motor vehicle wheel (1, 11) with the detector device (3) secured thereto performs a pivotal movement about the wheel axis (A) and that the rotary movement of the gear (6) which is coupled to the measuring transducer (7) corresponds to the angle (a) of said pivotal movement.

3. A wheel position measuring apparatus according to claim 2 characterised in that the detector device (3) is mounted on the wheel adaptor (2, 8) in a pivot mounting (9, 10) about the wheel axis (A) and the angle determination is derived from a pivotal movement, caused by the force of gravity, of the detector device (3) about the pivot mounting (9, 10).

4. A wheel position measuring apparatus according to claim 2 characterised in that the measuring transducer (7) has a potentiometer.

5. A wheel position measuring apparatus according to claim 3 characterised in that the pivot mounting (9, 10) of the detector device (3) is provided on a mounting trunnion (4) fixed to the wheel adaptor (2, 8) at the wheel axis (A).

6. A wheel position measuring apparatus according to claim 2 characterised in that the angle (a) of the pivotal movement of the detector device (3) is an angle through which the detector device (3) is pivoted relative to the horizontal about the wheel axis (A).

7. A wheel position measuring apparatus according to one of claims 2 to 6 characterised in that the angle (a) of the pivotal movement of the detector device (3) corresponds to a difference between the two angular positions which the detector device (3) has in the rim run-out compensation operation on the one hand when the motor vehicle wheel (1, 11) is lifted and on the other hand when the motor vehicle wheel is set down.

8. A wheel position measuring apparatus according to one of claims 2 to 5 characterised in that the rotary movement of the gear (6) which is coupled to the measuring transducer (7) corresponds to the angle (al, a2) through which the detrector device (3) is pivoted relative to the vertical about the wheel axis (A).

9. A wheel position measuring apparatus according to claim 8 characterised in that the angle (al, a2) is a pivot angle which is performed by the detector device (3) relative to the wheel adaptor (2, 8) when steering lock is applied in respect of the motor vehicle wheel outwardly and inwardly when measuring the steering swivel pin angle.

## Revendications

1. Procédé de compensation de voile de jante lors de la mesure de positions de roue sur un véhicule automobile qui consiste à mesurer, la roue étant tournée en position soulevée, les déviations, déterminées pendant au moins une rotation, qui proviennent d'un voile de jante de la roue, celles-ci étant transformées en un signal électrique sinusoïdal de compensation et enregistrées, et à effectuer la mesure de la position de la roue, après la pose de la roue sur un support en prenant en considération le signal de compensation enregistré,
    caractérisé,

en ce qu'il consiste à déterminer l'angle dont la roue tourne autour de son axe lorsqu'elle est posée sur le support et à décaler le point zéro du signal de compensation sinusoïdal de la valeur de l'angle enregistré.

2. Appareil de mesure de position de roue comprenant un dispositif de détection et un adaptateur de roue par lequel le dispositif de détection peut être fixé sur une roue de véhicule automobile à mesurer en étant aligné sur l'axe (A) de la roue, un appareil (5,6,12) de mesure d'angle branché entre le dispositif (3) à détecteur et l'adaptateur (2,8) de roue et destiné à mesurer une position d'angle de rotation que l'adaptateur (2,8) de roue et le dispositif (3) à détecteur ont l'un par rapport à l'autre autour de l'axe (A) de la roue dans un plan perpendiculaire à l'axe (A) de la roue, et un transducteur (7) de mesure qui transforme la position d'angle de rotation en un signal électrique,

caractérisé

en ce qu'est couplée au transformateur (7) de mesure une roue (6) dentée qui s'engrène dans une roue (56) dentée reliée de façon rigide à l'adaptateur (2,8) de roue et dont l'axe est coaxial à l'axe (A) de la roue, et qu'une rotation de la roue (6) dentée coulée au transducteur (7) de mesure correspond à un angle (a, a1, a2) qui est une variation de la position d'angle de rotation du dispositif (3) à détecteur vis à vis de l'adaptateur (2,8) de roue dans le plan perpendiculaire à l'axe (A) de la roue et en ce qu'un support (17), sur lequel la roue (1,11) de véhicule automobile soulevée peut être posée avec le dispositif (3) à détecteur fixé au-dessus de l'adaptateur (2.8) de roue et centré, est mobile de façon que la roue (1,11) de véhicule décrive avec le dispositif (3) à détecteur qui y est fixé un mouvement de rotation autour de l'axe (A) de la roue et que la rotation de la roue (6) dentée couplée au transducteur (7) de mesure corresponde à l'angle de ce mouvement de rotation.

3. Appareil de mesure de position de roue suivant la revendication 2 caractérisé en ce que le dispositif (3) à détecteur est monté sur l'adaptateur (2,8) de roue dans un palier (9,10) de pivot autour de l'axe (A) de la roue et que la détermination d'angle est dérivée d'un mouvement de rotation dù à la force de gravité du dispositif (3) à détecteur autour du palier (9,10) de pivot.

4. Appareil de mesure de position de roue suivant la revendication 2, caractérisé en ce que le transducteur (7) de mesure comporte un potentiomètre.

5. Appareil de mesure de position de roue suivant la revendication 3 caractérisé en ce que le palier (9,10) de pivot du dispositif (3) à détecteur est prévu sur un tourillon (4) fixé dans l'axe (A) de la roue sur l'adaptateur (2,8) de roue.

6. Appareil de mesure de position de roue suivant la revendication 2, caractérisé en ce que l'angle (a) du mouvement de rotation du dispositif (3) à détecteur est un angle dont le dispositif (3) à détecteur tourne par rapport à l'horizontal autour de l'axe (A) de la roue.

7. Appareil de mesure de position de roue suivant l'une des revendications 2 à 6, caractérisé en ce que l'angle (a) du mouvement de rotation du dispositif (3) à détecteur correspond à une différence des deux positions angulaires que le dispositif (3) à détecteur prend lors de la compensation de voile de jante, d'une part lorsque la roue (2,11) de véhicule automobile est en position soulevée, d'autre part lorsqu'elle est en position abaissée.

8. Appareil de mesure de position de roue suivant l'une des revendications 2 à 5, caractérisé en ce que la rotation de la roue (6) dentée couplée au transducteur (7) de mesure correspond à l'angle (a1, a2) dont le dispositif (3) à détecteur tourne par rapport à la verticale autour de l'axe (A) de la roue.

9. Appareil de mesure de position de roue suivant la revendication 8, caractérisé en ce que l'angle (a1,a2) est un angle de rotation que le dispositif (3) à détecteur décrit par rapport à l'adaptateur (2,8) de roue lors du braquage de la roue de véhicule vers l'extérieur et vers l'intérieur lors de la mesure de l'inclinaison de pivot.

FIG. 1

FIG. 2

FIG. 3

Sturz

Spur

A

(A)

(B)

90°

Ende Kompensation

Sturzebene

Sturz-
Speicherwert

O

180°

360°

Spurebene

max

mittel

min

Spur-Speicherwert

# FIG. 4

# FIG. 5

## (A)

19 13 16 3 18 17

## (B)

a1 19 13 16 3 18 17 b1 18

## (C)

a2 13 19 16 3 18 17 b2 18